# EUROPÄISCHE PATENTSCHRIFT

(11) **EP 1 159 145 B1**
(45) Veröffentlichungstag und Bekanntmachung des Hinweises auf die Patenterteilung: **14.05.2008**
(21) Anmeldenummer: 00916911.1
(22) Anmeldetag: 09.03.2000
(51) Int. Cl.: B60C 19/00

(54) **FAHRZEUGRAD, INSBESONDERE FÜR EINEN PKW**
VEHICLE WHEEL, NOTABLY FOR A PRIVATE MOTOR CAR
ROUE DE VEHICULE, NOTAMMENT POUR VOITURE PARTICULIERE

(30) Priorität: 10.03.1999 DE 19910702
(43) Veröffentlichungstag der Anmeldung: 05.12.2001
(73) Patentinhaber: HP-CHEMIE PELZER RESEARCH & DEVELOPMENT Ltd., Waterford, County Waterford (IE)
(72) Erfinder: BOPP, Michael, D-58455 Witten (DE); BRADE-SCHOLZ, Gabriele, D-47906 Kempen (DE); DÖHRING, Olaf, D-44137 Dortmund (DE); HERF, Martin, D-58453 Witten (DE); LORENZ, Ivo, D-02625 Bautzen (DE); SCHULZ, Bernhard, D-44289 Dortmund (DE)
(74) Vertreter: Hilleringmann, Jochen
(86) Internationale Anmeldenummer: PCT/EP2000/002032
(87) Internationale Veröffentlichungsnummer: WO 2000/053438

(56) Entgegenhaltungen:
- DE-A- 2 040 898
- DE-A- 3 823 157
- DE-A- 4 400 912
- PATENT ABSTRACTS OF JAPAN vol. 1996, no. 09, 30. September 1996 (1996-09-30) & JP 08 132816 A (SUMITOMO RUBBER IND LTD), 28. Mai 1996 (1996-05-28)

## Beschreibung

Die Erfindung betrifft ein Fahrzeugrad, wie es insbesondere für einen Pkw eingesetzt werden kann. Letztendlich ist die Erfindung aber auf sämtliche Arten von Fahrzeugrädern, insbesondere Kraftfahrzeugrädern, wie beispielsweise für Lkws, Motorräder o.dgl. zweirädriger Fahrzeuge anwendbar. Eine weitere Anwendung des Fahrzeugrades nach der Erfindung ist beispielsweise bei einem Fahrrad denkbar.

Mit dem Wunsch nach steigendem Fahrkomfort bei Kraftfahrzeugen kommt in zunehmendem Maße auf die Fahrzeugindustrie die Forderung zu, den Körperschall, der beim Abrollen der Reifen entsteht und über die Räder, die Achsen, die Achsaufhängung und das Chassis auf den Fahrzeuginnenraum einwirken, zu dämpfen.

Aus der gattungsbildenden DE-A1-4400912, aus der EP-A-0029120 sowie aus der nicht vorveröffentlichten WO-A-9955542 (Priorität DE-A-19819128) ist es bekannt, auf der Außenseite der Felge bzw. in Innenraum des Reifens schallabsorbierendes Material anzuordnen. Sofern es sich im Stand der Technik hierbei um Fasern handelt, sind diese nach Art eines Knäuels angeordnet und ineinander geschlungen innerhalb einer perforierten Hülle untergebracht, die sich ringförmig um die Felge erstreckt und in den Innenraum des Rades vorsteht (siehe z. B. Fign. 5 und 6 von EP-A-0 029 120). Schließlich ist aus DE-A-38 23 157 ein mit Flockfasern beflocktes Flächengebilde bekannt, das unter anderem zu Schallisolationszwecken eingesetzt werden kann.

Auch wenn die bekannten Fahrzeugräder aufgrund des Einbringens schallabsorbierender Materialien gute Schalldämpfungseigenschaften aufweisen, so weisen diese bekannten Systeme den Nachteil auf, dass sich das Schallabsorptionsmaterial und der Reifen auf der Felge nur mit relativ großem Aufwand montieren lassen.

Der Erfindung liegt daher die Aufgabe zugrunde, ein Fahrzeugrad mit einem Schallabsorptionsmaterial zu schaffen, bei dem sich der Reifen bei Anordnung dieses Materials problemlos aufziehen und abnehmen läßt, und zwar ohne dass dabei das Schallabsorptionsmaterial beschädigt wird und damit seine Schallabsorptionseigenschaften beim Betrieb des Rades und die Funktionstüchtigkeit des Rades beeinträchtigt sind.

Zur Lösung dieser Aufgabe wird mit der Erfindung ein Fahrzeugrad, insbesondere für ein Kraftfahrzeug, wie einen Pkw, vorgeschlagen, wobei das Fahrzeugrad versehen ist mit
- einer Radscheibe zur Anbringung an einer Drehachse,
- einer Felge, die mit der Radscheibe verbunden ist und eine der Radscheibe abgewandte Außenseite aufweist, und
- einem luftschallabsorbierendem Fasermaterial, das auf der Außenseite der Felge angeordnet ist,
- wobei das Fasermaterial eine auf der Außenseite der Felge aufliegende Trägerschicht aufweist, die eine der Außenseite der Felge zugewandte Unterseite und eine dieser abgewandte Außenseite aufweist, von der die Fasern abstehen, und
- die Trägerschicht an der Außenseite der Felge gehalten ist.

Jedes Fahrzeugrad weist eine Felge auf, die der Aufnahme und Halterung eines Reifens dient. Die Felge selbst ist über die sogenannte Radscheibe mit der Drehachse verbunden. Radscheibe und Felge bestehen im allgemeinen aus Metall (Stahl oder Leichtmetall). Erfindungsgemäß wird auf der Außenseite der Felge, die bei auf der Felge aufgeschobenem Reifen dem Reifeninnern zugewandt ist, ein luftschallabsorbierendes Fasermaterial angebracht. Dieses Material sollte mechanisch stabil und temperaturbeständig sowie zuverlässig an der Felge befestigt sein, um den mechanischen Beanspruchungen (Fliehkräfte beim Betrieb des Rades und Scherkräfte beim Montieren und Demontieren des Reifens) und den Temperatureinflüssen (im Reifeninnern und an der Felge können Temperaturen von bis zu 120 °C auftreten) standzuhalten.

Das Fasermaterial weist dabei eine Trägerschicht auf, die vorzugsweise in Form eines Streifens um die Felge herum gelegt und an der Felge befestigt ist. Von dieser Trägerschicht stehen Fasern ab, die in Form von Schlingen ausgebildet oder mit freien der Trägerschicht abgewandten Enden versehen sind. Als Fasermaterial eignet sich insbesondere Schlingenware, Plüschware, Einzelfasern, Garne (gedrehte Fasern) oder Vliesmaterial, deren Fasern in der Trägerschicht eingebettet sind.

Um die von dem Fahrzeugrad gebildete "drehende Masse" trotz Aufbringung des luftschallabsorbierenden Material so gering wie möglich zu halten, ist es von Vorteil, wenn das luftschallabsorbierende Fasermaterial leichtgewichtig ist. Hier bietet sich insbesondere Kunstfasermaterial (Polyamid, Polyacryl. Polyester, PP, Viscose) an, wobei die Fasern in einer leichtgewichtigen Trägerschicht verankert sind. Diese Trägerschicht sollte mechanisch stabil und hohen Zugspannungen aussetzbar sein, um den mitunter extremen Zentrifugalkräften bei Rotation des Fahrzeugrades und den Scherkräften beim Montieren und Demontieren des Reifens standzuhalten.

Im Handel erhältlich sind Plüschmaterialien aus Kunstfasern, Naturfasern oder einer Mischung von beiden. Diese Plüschmaterialien werden für die unterschiedlichsten Zwecke eingesetzt. So findet man beispielsweise Plüschmaterial auf der rückwärtigen Seite von Lammfell-Sitzüberzügen. Plüschmaterial wird aber auch als Fell für Stofftiere eingesetzt. Versuche haben ergeben, dass man mit handelsüblich erhältlichem Plüschmaterial mit Faserlängen zwischen 10 mm und 25 mm (Faserlänge gleich Abstand des freien Endes der Fasern zur Trägerschicht) hervorragende Absorptionseigenschaften erzielen kann. Das Flächengewicht des vorzugsweise zum Einsatz kommenden Stofftier-Plüschmaterials liegt bei ca. 300 g bis 1800 g/m². Fasermaterialien mit Flächengewichten (Fasern und Trägerschicht) von bis zu 3 kg/m², vorzugsweise 2kg/m² und insbesondere bis zu 1,5 kg/m² sind einsetzbar.

Was die Faserdichte und -länge des vorzugsweise als luftschallabsorbierendes Material eingesetzten Fasermaterials anbelangt, so gilt ganz grundsätzlich, dass die schallabsorbierende Wirkung des Fasermaterials um so effektiver ist, je länger und je dichter die Fasern sind. Insbesondere was die Länge der Fasern anbelangt, sind hier Grenzen gesetzt. Trotz Aufbringung des absorbierenden Materials auf der Felge soll nämlich selbstverständlich die Montage des Reifens nicht eingeschränkt werden.

Versuche haben ergeben, dass Faserlängen von 5 mm bis 40 mm, insbesondere 10 mm bis 25 mm und vorzugsweise 12 mm bis 20 mm einen guten Kompromiss zwischen der Reifenmontaaefreundlichkeit sowie -tauglichkeit des Fasermaterials und seinem Schallabsorptionsvermögen erzielt werden. Das absorbierende Material läßt sich unter Berücksichtigung der obigen Randbedingungen im allgemeinen lediglich in demjenigen Bereich der Felge einsetzen, innerhalb dessen die Außenseite unterhalb des Niveaus der Anlagebereiche der Reifenwulste liegt. Dies ist zumeist im mittleren axialen Bereich der Felge möglich, wobei je nach Ausgestaltung der Felge dafür Sorge getragen werden sollte, dass sich das absorbierende Material nicht im sogenannten Tiefbett (montagebedingte Vertiefung der Felge in der Außenfläche) befinden sollte.

Der Abstand des absorbierenden Fasermaterials zum innenliegenden. d.h. von der Radscheibe weiter beabstandeten Anlagebereich der Felge sollte mindestens gleich der maximalen Höhe der absorbierenden Materialschicht sein. Wird für dieses Material ein Fasermaterial mit von einer Trägerschicht abstehenden und einer Faserlänge aufweisenden Fasern verwendet, so ist es zweckmäßig, den zuvor beschriebenen Abstand zumindest gleich der Faserlänge zu wählen. Dies hat seine Ursache darin, dass dann bei der Reifenmontage die sich aufgrund des Schiebens des innenliegenden Reifenwulstes über das Fasermaterial sich legenden Fasern nicht bis in den Anlagebereich hineingelangen. Dieser Anlagebereich sollte von Fremdkörpern, wie es auch die Fasern darstellen können, frei sein, da in diesem Bereich eine dichte Anlage des Reifens an der Felge gewünscht wird.

Bei der Trägerschicht handelt es sich entweder um ein Gewebe, in dem die Fasern verankert sind, oder um eine Schicht, z. B. Kleberschicht, in der die Fasern teilweise eingebettet sind. Im Falle einer Gewebe-Trägerschicht sind die Fasern in diese eingewebt und dadurch in ihren Mittelabschnitten verankert. Bei einer monolitischen Trägerschicht werden die Fasern durch eine spezielle Technik, nämlich durch einen Beflockungsprozess in der Trägerschicht eingebettet. Die eingebetteten Faserenden können Verdickungen aufweisen, um mit diesen eingebetteten Verankerungsenden zuverlässiger in der Trägerschicht verankert zu sein.

Mit der Erfindung wird denjenigen Schwingungsformen entgegengetreten, die allgemein durch Anregung von Oberflächen auf Fahrzeugrädern beim Überrollen/Überfahren einwirken. Insbesondere werden diejenigen Schwingungen vermieden oder reduziert, die beim Überfahren sehr rauher Oberflächen oder von Stoßfugen/Kanten/Querrillen angeregt werden. Die dabei entstehenden Verformungen des Reifens im Bereich seiner auf dem Untergrund aufliegenden Lauffläche führen zum Einschwingen des eingeschlossenen Gasvolumens im Reifen. Die sich dabei ausbildende Grundeigenschwingung ergibt sich aus der Länge des abgewickelten Kanals, welcher durch die Felge und den Reifen gebildet wird. Diese Grundeigenfrequenz liegt üblicherweise zwischen 200 Hz und 350 Hz und wird ganz überwiegend durch die Länge des Kanals (mittlerer Umfang des Reifens) bestimmt. Da der Reifen relativ weich ist und sämtliche Begrenzungsflächen innerhalb des Volumens mit glatten Oberflächen versehen sind, entsteht bei einigen konkreten Frequenzen ein Nachklingen ähnlich dem Nachhallen in derartigen Räumen. Infolge dieses Nachklangs werden Reifen und Felgen als den Kanal begrenzende Bauteile selbst zu Schwingungen (Körperschall) gleicher oder ähnlicher Frequenzen angeregt, welche sich dann über Radnabe/Achsschenkel/Achskörper als Körperschall in den Fahrzeugaufbau übertragen. Ein Teil des Geräusches dringt jedoch auch als direkter Luftschall in den Innenraum und ist darüber hinaus für Passanten als störendes Verkehrsgeräusch wahrnehmbar.

Durch das Einbringen des luftschallabsorbierenden Fasermaterials werden mehrere Wirkungsweisen/Mechanismen ausgelöst. Die ausgeprägten Eigenschwingungsformen (Grundschwingung) werden um einige Hertz (typischerweise 5 Hz bis 30 Hz) zu tieferen Frequenzen verschoben. Der Schalldruckpegel der einzelnen Eigenschwingungsspitzen wird reduziert. Dabei nehmen Verschiebung und Pegelreduktion mit steigender Frequenz zu. Als Folge dieser Veränderung können die durch die Geometrie des Volumens zu erwartenden Grundeigenschwingungen und in deren Folge entstehendes Nachklingen bei konkreten Frequenzen nicht mehr stattfinden. Der Nachhall der Eigenschwingformen klingt sehr viel schneller ab. Als Folge hieraus werden Reifen und Felgen nicht mehr zur Eigenschwingung bei diesen störenden Frequenzen angeregt und infolge dessen findet eine Übertragung auf die benachbarten Strukturen (Reifen und Felge) nicht mehr statt. Eine störende Komponente im Innengeräusch - angeregt durch eine derartige Reifenresonanz - ist nicht länger wahrnehmbar. Das für Passanten wahrnehmbare Außengeräusch beim Überfahren von Unebenheiten wird ebenfalls deutlich reduziert.

Sinngemäß besteht die schallabsorbierende Wirkung der erfindungsgemäßen Maßnahme, nämlich die Radfelge mit luftschallabsorbierendem Fasermaterial zu belegen, also darin, dass die Ausprägung stehender Wellen im Reifeninnern gedämpft bzw. unterdrückt wird, so dass es insoweit auch lediglich zu einer reduzierten Übertragung auf die benachbarten Strukturen des Fahrzeugrades kommen kann. Die Reduktion des sich auf den Fahrzeugaufbau auswirkenden und durch die Verformung des Fahrzeugreifens reduzierten Körperschalls wird also mit der Erfindung dadurch erreicht, dass die "Zwischenstufe" der Ausprägung von stehenden Wellen im Reifeninnern durch das luftschallabsorbierende Material unterdrückt bzw. gedämpft wird. Hier spielen Mechanismen wie insbesondere die streifende Absorption eine ganz entscheidende Rolle. Streifende Absorption kann wirkungsvoll mit Hilfe von Fasermaterial großer Faserlänge und hoher Faserdichte erzielt werden. Die einzelnen Fasern des Fasermaterials richten sich spätestens bei Rotation des Rades radial aus, sind also insoweit geordnet gerichtet. Hierin ist ebenfalls ein Grund zu sehen, warum es bei Verwendung des erfindungsgemäß eingesetzten Fasermaterials zu den überraschend guten Ergebnissen kommt.

Nachfolgend wird die Erfindung anhand der Zeichnung näher erläutert. Im einzelnen zeigen:
- Fig.1: einen Halbschnitt durch ein Fahrzeugrad mit schlauchlosen Reifen gemäß einem 1. Ausführungsbeispiel und
- Fig. 2: einen Halbschnitt durch ein Fahrzeugrad mit schlauchlosen Reifen gemäß einem 2. Ausführungsbeispiel.

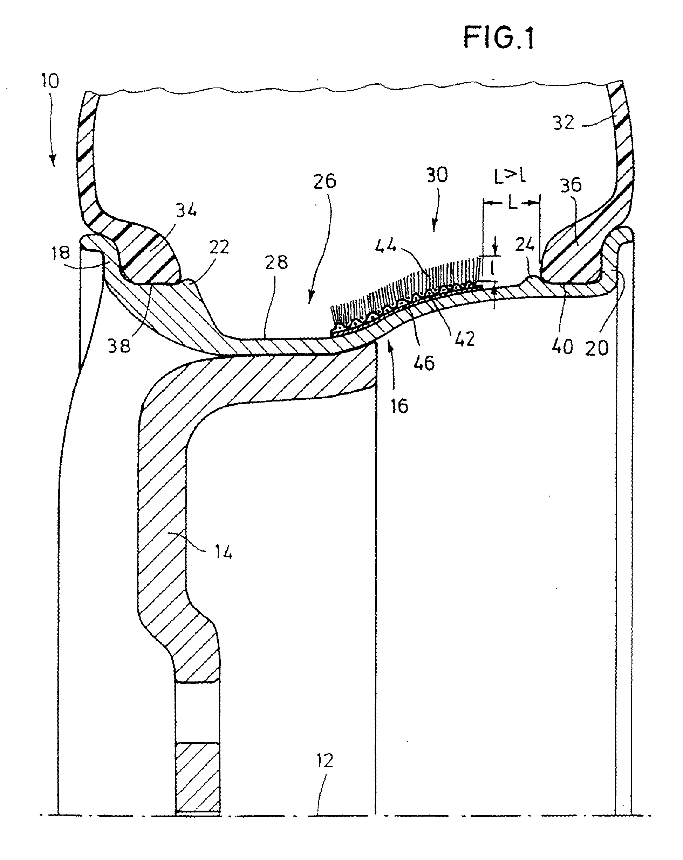

In Fig. 1 ist ein Teilschnitt durch ein Fahrzeugrad 10 gezeigt. Dieses Fahrzeugrad 10 weist eine an der Drehachse 12 anbringbare Radscheibe 14 mit einer von dieser gehaltenen Felge 16 auf. Die Felge 16 ist mit einem Außen- und einem Innen-Felgenhorn 18,20 versehen, die in dem hier gezeigten Fall in J-Form ausgebildet sind. Angrenzend an die Felgenhörner 18,20 weist die Felge 16 jeweils einen sogenannten Hump 22.24 auf, der nach Art einer wulstartigen Verdickung auf der Außenseite 26 der Felge 16 ausgebildet ist. An dem Außenhump 22 schließt sich der montagebedingte Tiefbett-Bereich 28 an. Dieser Tiefbett-Bereich 28 stellt sich als Vertiefung der Außenseite 26 der Felge 16 dar, wobei diese ausgehend von dem vertieften Bodenbereich bis zum höhergelegenen Niveau des Innenhumps 24 wieder ansteigt. In dem Bereich zwischen dem Tiefbett-Bereich 28 und dem Innenhump 24 läßt sich luftschallabsorbierendes Material anordnen, das in diesem Fall als Fasermaterial 30 ausgebildet ist. Denn dieser Bereich ist im Hinblick auf die Montage des Reifens 32 am geeignetsten, um die Felge 16 mit Material zu belegen. Der schlauchlose Reifen 32 selbst liegt, wie in Fig. 1 dargestellt, mit seinen Außen- und Innenwülsten 34,36 dichtend innerhalb der Anlagebereiche 38,40 zwischen den Felgenhörner 18 und den Humpen 22 an. Dabei sorgen die Humpen 22 dafür, dass der Reifen 32 nicht nach innen rutscht, während die Felgenhörner 18,20 für die Außenseitenunterstützung des Reifens 32 sogen.

Wie in Fig. 1 zu erkennen ist, weist das Fasermaterial 30 eine Trägerschicht 42 auf, von der einzelne Fasern 44 (Kunststoff- oder Naturfasern) abstehen. Bei dem Fasermaterial 30 handelt es sich um ein langfloriges Plüschmaterial, wie es im Handel erhältlich ist und beispielsweise als Fell für Stofftiere verwendet wird. Die Trägerschicht 42 besteht aus miteinander verwebten Fasern (beispielsweise Kett- und Schussfäden), zwischen denen die Fasern 44 verwebt sind. Die Trägerschicht 42 ist mittels eines Klebers 46 an der Felge 16 festgeklebt. Alternative Befestigungsmöglichkeiten nutzen mechanische Befestigungselemente aus, die in Form von Spannringen um die Felge 16 herum verlaufen oder mechanisch mit der Felge 16 verbunden sind (beispielsweise Verschraubung). Aus Gründen einer leichtgewichtigen Ausführung sind Klebeverbindungen zwischen dem Fasermaterial 30 und der Felge 16 bevorzugt.

Damit sich die Fasern 44 im dem Innenhump 24 bzw. der Innenfelgenhorn 20 zugewandten Randbereich des nach Art eines Streifens um die Felge 16 herum gelegten Fasermaterials 30 beim Aufziehen des Reifens 32 auf die Felge 16 nicht bis in den Anlagebereich 40 erstrecken, wo es dann zu Undichtigkeiten kommen könnte, ist es zweckmäßig, das Fasermaterial 30 um zumindest die Länge der Fasern 44 vom Innenhump 24 beabstandet anzuordnen. Sofern ein Fasermaterial 30 eingesetzt wird, dessen Fasern im zum Innenhump 24 bzw. zum Innenfelgenhorn 20 weisenden Randbereich gekürzt sind, kann dieses Material 30 dann entsprechend näher an den Innenhump 24 herangeführt werden.

Die Anforderungen an das Fasermaterial 30 sind in erster Linie Temperaturbeständigkeit und mechanische Festigkeit. Versuche haben ergeben, dass die Felge 16 Temperaturen von bis zu 120 °C annehmen kann. Entsprechend temperaturfest sollten die Fasern 44 sein. Hier kommen demzufolge als Material für die Fasern Polypropylen, Polyethylen, Polyamid oder Polyacryl in Frage, wenn man einmal Kunststofffasern einbezieht. Der Kleber 46 muss ebenfalls diesen Temperaturen entsprechend gewählt werden. Entsprechende Klebemittel sind im Markt erhältlich. Ferner sollte dafür gesorgt werden, dass die Fasern 44 mit ausreichender Zugfestigkeit in der Trägerschicht 42 verankert sind. An den Rändern des streifenförmigen Fasermaterials 30 sollte dieses behandelt sein (beispielsweise verschweißt), um in diesem Bereich ein Herauslösen der Fasern 44 aus der Trägerschicht 42 zu verhindern. Auch was die Reißfestigkeit und Verankerungsfestigkeit der Fasern 44 anbelangt, so hat sich in Versuchen herausgestellt, dass hier auch die als Fell für Stofftiere verwendeten Plüschmaterialien eingesetzt werden können. Denn diese Materialien müssen mechanisch zuverlässig in der Trägerschicht verankert sein, da sich ablösende Fasern gesundheitsgefährdend für den Menschen sein können.

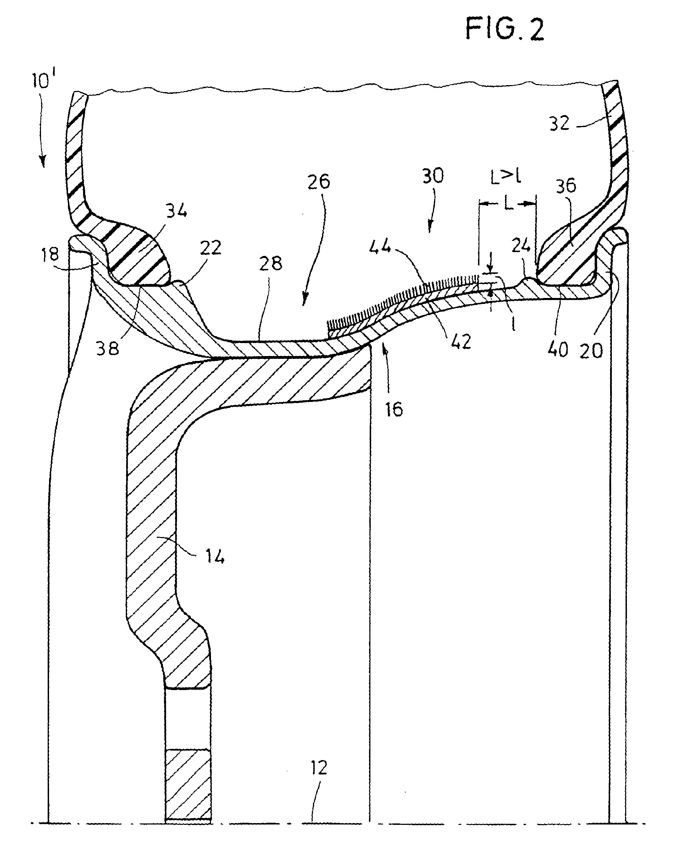

Fig. 2 zeigt einen Teilschnitt durch ein Fahrzeugrad 10' gemäß einer alternativen Ausgestaltung der Erfindung. Der Unterschied beider Räder 10,10' besteht in der Ausbildung des Fasermaterials 30. Bei dem Rad 10' gemäß Fig. 2 wird ein Flockfasermaterial eingesetzt, dessen Trägerschicht 42 monolitisch ist und aus einer verfestigten Einbettmasse (z. B. Kleber) besteht, in die die einen Enden der Fasern 44 eingebettet sind. Hierbei wird die Felge des Fahrzeugrads 10' bestehend aus einem Metall, insbesondere Aluminium oder Stahl, durch einen Beflockungsprozess mit Kurzfasern 44 belegt. Die Kurzfasern dienen der Absorption von Luftschall. Die Felge 16 wird hierzu unter Verwendung einer Maskentechnik in einer entsprechenden Beflockungsanlage mit einem temperaturbeständigen Kleber (Trägerschicht 42) umlaufend, partiell beschichtet. In einem zweiten Schritt wird die Felge 16 mit den Kurzfasern 44 beflockt. Überschüssige Fasern werden schließlich abgesaugt. Die Fasern 44 stehen infolge ihrer Ausrichtung im elektrischen Feld beim Beflockungsprozess senkrecht auf der Felgenoberfläche. Anschließend werden die Fasern 44 durch eine thermische oder strahlungstechnische Behandlung in der Kleberschicht (Trägerschicht 42) fixiert.

## Patentansprüche

1. Fahrzeugrad, insbesondere für ein Kraftfahrzeug, z.B. einen Pkw, mit
- einer Radscheibe (14) zur Anbringung an einer Drehachse (12)
- einer Felge (16), die mit der Radscheibe (14) verbunden ist und eine der Radscheibe (14) abgewandte Außenseite (26) aufweist, und
- einem luftschallabsorbierendem Fasermaterial (30), das auf der Außenseite (26) der Felge (16) angeordnet ist,
**dadurch gekennzeichnet,**
- **dass** das Fasermaterial (30) eine auf der Außenseite (26) der Felge (16) aufliegende Trägerschicht (42) aufweist, die eine der Außenseite (26) der Felge (16) zugewandte Unterseite und eine dieser abgewandte Außenseite aufweist, von der die Fasern (44) abstehen, und
- **dass** die Trägerschicht (42) an der Außenseite (26) der Felge (16) gehalten ist.

2. Fahrzeugrad nach Anspruch 1, **dadurch gekennzeichnet, dass** die Fasern (44) freie Enden aufweisen, die der Trägerschicht (42) abgewandt sind.

3. Fahrzeugrad nach Anspruch 1 oder 2, **dadurch gekennzeichnet, dass** das Fasermaterial (30) Einzelfasern (44) oder Garne aufweist.

4. Fahrzeugrad nach einem der Ansprüche 1 bis 3, **dadurch gekennzeichnet, dass** die Fasern (44) jeweils einen Mittelabschnitt und beidseitig dieses freie Endabschnitte aufweisen, dass sich die Mittelabschnitte der Fasern (44) auf der Unterseite der Trägerschicht (42) befinden und dass sich die Endabschnitte der Fasern (44) ausgehend von deren Mittelabschnitten durch die Trägerschicht (42) hindurch bis zur Oberseite der Trägerschicht (42) und über diese hinaus erstrecken.

5. Fahrzeugrad nach einem der Ansprüche 1 bis 4, **dadurch gekennzeichnet, dass** die Trägerschicht (42) ein Fasergewebe ist, in dem die abstehenden Fasern (44) durch Verweben verankert sind.

6. Fahrzeugrad nach einem der Ansprüche 1 bis 3, **dadurch gekennzeichnet, dass** die Fasern in der Trägerschicht (42) verankerte Verankerungsenden und der Trägerschicht abgewandte freie Enden aufweisen.

7. Fahrzeugrad nach Anspruch 6, **dadurch gekennzeichnet, dass** die Trägerschicht (42) eine Einbettmasse, insbesondere einen Kleber, aufweist und dass die Verankerungsenden der Fasern (44) in der ausgehärteten Einbettmasse eingebettet sind.

8. Fahrzeugrad nach Anspruch 7, **dadurch gekennzeichnet, dass** die Einbettmasse an der Ausenseite (26) der Felge (16) haftet.

9. Fahrzeugrad nach einem der Ansprüche 1 bis 8, **dadurch gekennzeichnet, dass** die mittlere Länge der Fasern (44) zwischen der Trägerschicht (42) und ihren freien Enden größer als 5 mm und kleiner als 40 mm, insbesondere größer als 10 mm und kleiner als 25 mm sind und vorzugsweise zwischen 12 mm und 20 mm beträgt.

10. Fahrzeugrad nach einem der Ansprüche 1 bis 9, **dadurch gekennzeichnet, dass** das Flächengewicht des Fasermaterials (30) bis zu 3 kg/m². vorzugsweise bis zu 2 kg/m² beträgt und insbesondere zwischen 0,3 kg/m² und 1,5 kg/m² liegt.

11. Fahrzeugrad nach einem der Ansprüche 1 bis 9, **dadurch gekennzeichnet, dass** als Fasermaterial (30) ein Plüschmaterial eingesetzt wird.

12. Fahrzeugrad nach einem der Ansprüche 1 bis 11, **dadurch gekennzeichnet, dass** die Fasern (44) Kunststofffasern, insbesondere aus Polyamid, Polyacryl, Polyester, Polypropylen, Polyethylen oder Viscose sind.

13. Fahrzeugrad nach einem der Ansprüche 1 bis 12, **dadurch gekennzeichnet, dass** die Felge (16) an ihrer Außenseite (26) einen der Radscheibe (14) abgewandten, innenliegenden Anlagebereich (40) für den Innenwulst (36) eines Reifens (32) aufweist und dass der Abstand dieses Anlagebereichs (40) von dem diesem zugewandten Rand des Fasermaterials (30) zumindest gleich der Faserlänge ist.

14. Fahrzeugrad nach einem der Ansprüche 1 bis 13, **dadurch gekennzeichnet, dass** die Felge (16) an ihrer Außenseite (26) einen vertieften Bereich (28) aufweist, der zwischen der Radscheibe (14) und dem innen liegenden Anlagebereich (40) für den Innenwulst (36) des Reifens (32) angeordnet ist, und dass sich das Fasermaterial (30) zwischen dem vertieften Bereich (28) und dem Anlagebereich (40) befindet.

15. Fahrzeugrad nach einem der Ansprüche 1 bis 14, **dadurch gekennzeichnet, dass** das luftschallabsorbierende Fasermaterial (30) mit der Außenseite (26) der Felge (16) verklebt und/oder mittels mit der Felge (16) verbindbarer Befestigungselemente oder mittels um die Außenseite (26) der Felge (16) umlaufende Befestigungselemente mechanisch gehalten ist.

16. Verwendung eines Fasermaterials (30) mit einer Trägerschicht (42) und von dieser abstehenden Fasern (42) zur Anbringung innerhalb des an den Innenraum eines Reifens (32) angrenzenden Teils der radialen Außenseite (26) einer Fahrzeugfelge (16) zwecks Absorption von Luftschall, der im Innenraum des Reifens (32) von auf den Reifen (32) einwirkenden impulsartigen Erschütterungen entsteht.

## Claims

1. A vehicle wheel, especially for a motor vehicle, e.g. a passenger car, comprising
- a wheel disk (14) to be attached to a rotation axis (12),
- a wheel rim (16) connected to the wheel disk (14) and having an outer surface (26) facing away from the wheel disk (14), and
- an airborne-noise-absorbing fiber material (30) situated on the outer surface (26) of the rim (16),
**characterized in**
- **that** the fiber material (30) having a carrier layer (42) located on the outer surface (26) of the rim (16), the carrier layer having a bottom surface facing towards the outer surface (26) of the rim (16), and having an outer surface facing away from the rim and having the fibers (44) extending therefrom, and
- **that** the carrier layer (42) is held on the outer surface (26) of the rim (16).

2. The vehicle wheel according to claim 1, **characterized in that** the fibers (44) have free ends facing away from the carrier layer (42).

3. The vehicle wheel according to claim 1 or 2, **characterized in that** the fiber material (30) comprises single fibers (44) or yarns.

4. The vehicle wheel according to any one of claims 1 to 3, **characterized in that** the fibers (44) each have a middle section and on both sides thereof have free end portions, that the middle sections of the fibers (44) are arranged on the bottom of the carrier layer (42), and that the end portions of the fibers (44) extend from their middle sections through the carrier layer (42) to the top of the carrier layer (42) and beyond.

5. The vehicle wheel according to any one of claims 1 to 4, **characterized in that** the carrier layer (42) is a fiber texture where the fibers extending therefrom are anchored by interweaving.

6. The vehicle wheel according to any one of claims 1 to 3, **characterized in that** the fibers have anchoring ends anchored in the carrier layer (42), and free ends facing away from the carrier layer.

7. The vehicle wheel according to claim 6, **characterized in that** the carrier layer (42) comprises an embedding substance, particularly an adhesive, and that said anchoring ends of the fibers (44) are incorporated into the hardened embedding substance.

8. The vehicle wheel according to claim 7, **characterized in that** the embedding substance adheres to the outer surface (26) of the rim (16).

9. The vehicle wheel according to any one of claims 1 to 8, **characterized in that** the average length of the fibers (44) between the carrier layer (42) and their free ends is more than 5 mm and less than 40 mm, preferably more than 10 mm and less than 25 mm, and preferably is between 12 mm and 20 mm.

10. The vehicle wheel according to any one of claims 1 to 9, **characterized in that** the weight per unit area of the fiber material (30) amounts to up to 3 kg/m², preferably up to 2 kg/m², and most preferably is between 0.3 kg/m² and 1.5 kg/m².

11. The vehicle wheel according to any one of claims 1 to 9, **characterized in that** a plush material is used as said fiber material (30).

12. The vehicle wheel according to any one of claims 1 to 11, **characterized in that** the fibers are synthetic fibers, preferably of polyamide, polyacrylic, polyester, polypropylene, polyethylene and viscose.

13. The vehicle wheel according to any one of claims 1 to 12, **characterized in that** the rim (16) has its outer surface (26) provided with an inner contact area (40) to the inner bead (36) of a tire (32), said contact area facing away from the wheel disk (14), and that the distance between this contact area (40) and the border of the fiber material facing to it is at least equal to the length of the fibers.

14. The vehicle wheel according to any one of claims 1 to 13, **characterized in that** the rim (16) has its outer surface (26) formed with a depressed area (28) arranged between the wheel disk (14) and the inner contact area (40) to the inner bead (36) of a tire (32), and that the fiber material (30) is situated between the depressed area (28) and the contact area (40).

15. The vehicle wheel according to any one of claims 1 to 14, **characterized in that** the airborne-noise-absorbing fiber material (30) is glued to the outer surface (26) of the rim (16) and/or is mechanically held by fixing devices to be joined to the rim (16) or by fixing devices arranged around the outer surface (26) of the rim (16).

16. Use of a fiber material (30) with a carrier layer (42) and fibers extending from said layer (42) for affixation within the part of the radial outer surface (26) of a vehicle rim (16) adjacent to the inner space of a tire (32) to absorb airborne noise generated in the interior of the tire (32) due to pulsed reverberations affecting the tire (32).

## Revendications

1. Roue de véhicule, notamment d'un véhicule automobile, une voiture de tourisme par exemple, qui comprend :
- un disque de roue (14) pour montage sur un axe de rotation (12)
- une jante (16) qui est reliée au disque de roue (14) et présente une face externe (26) à l'opposé du disque de roue (14)
- un matériau fibreux (30) absorbant les bruits aériens, qui est disposé sur la face externe (26) de la jante (16),
**caractérisée en ce que**
- le matériau fibreux (30) présente, posée sur la face externe (26) de la jante (16), une couche porteuse (42) avec une face inférieure en regard de la face externe (26) de la jante et à l'opposé de celle-ci, une face externe sur laquelle font saillie les fibres (44),
- la couche porteuse (42) est maintenue sur la face externe (26) de la jante (16).

2. Roue de véhicule selon la revendication 1, **caractérisée en ce que** les fibres (44) présentent des extrémités libres qui sont situées à l'opposé de la couche porteuse (42).

3. Roue de véhicule selon la revendication 1 ou 2, **caractérisée en ce que** le matériau fibreux (30) présente des fibres individuelles (44) ou des fils.

4. Roue de véhicule selon une des revendications 1 à 3, **caractérisée en ce que** les fibres (44) ont chacune une partie médiane avec, des deux côtés de celle-ci, des parties d'extrémité, les parties médianes de fibres (44) se trouvant sur la face inférieure de la couche porteuse (42) tandis que les parties d'extrémité des fibres (44) partent des parties médianes en traversant la couche porteuse (42) pour atteindre la face supérieure de la couche (42) et s'étendre au-dessus d'elle.

5. Roue de véhicule selon une des revendications 1 à 3, **caractérisée en ce que** la couche porteuse (42) est un tissu fibreux dont les fibres en saillie (44) sont ancrées par entrelacement.

6. Roue de véhicule selon une des revendications 1 à 3, **caractérisée en ce que** les fibres ont des extrémités d'ancrage qui sont ancrées dans la couche porteuse (42) ainsi que des extrémités libres éloignées de la couche porteuse.

7. Roue de véhicule selon la revendication 6, **caractérisée en ce que** la couche porteuse (42) présente une masse d'insertion, constituée notamment par un adhésif et les extrémités d'ancrage des fibres (44) sont noyées dans cette masse

8. Roue de véhicule selon la revendication 7, **caractérisée en ce que** la masse d'insertion adhère à la face externe (26) de la jante (16).

9. Roue de véhicule selon une des revendications 1 à 8, **caractérisée en ce que** la longueur moyenne des fibres (44) entre la couche porteuse (42) et leurs extrémités libres est comprise entre 5 et 40 mm, notamment entre 10 et 25 mm et de préférence entre 12 et 20 mm.

10. Roue de véhicule selon une des revendications 1 à 9, **caractérisée en ce que** la densité superficielle du matériau fibreux va jusqu'à 3kg/m², de préférence jusqu'à 2 kg/m² et elle est notamment comprise entre 0,3 et 1,5 kg/m².

11. Roue de véhicule selon une des revendications 1 à 9, **caractérisée en ce qu'**un matériau pelucheux est utilisé comme matériau fibreux (30).

12. Roue de véhicule selon une des revendications 1 à 11, **caractérisée en ce que** les fibres (44) sont des fibres synthétiques, notamment en polyamide, polyacryle, polyester, polypropylène, polyéthylène ou viscose.

13. Roue de véhicule selon une des revendications 1 à 12, **caractérisée en ce que** la jante (16) présente sur sa face externe (26), à destination du talon interne (36) d'un pneu (32), une zone d'appui interne éloignée du disque de roue (14) et qui présente, par rapport au bord du matériau fibreux (30) situé en face d'elle, une distance au moins égale à la longueur des fibres.

14. Roue de véhicule selon une des revendications 1 à 13, **caractérisée en ce que** la jante (16) présente sur sa face externe (26) une zone en creux (28) située entre le disque de roue (14) et la zone interne d'appui (40) destinée au talon interne (36) du pneu, le matériau fibreux (30) se trouvant entre la zone en creux (28) et la zone d'appui (40).

15. Roue de véhicule selon une des revendications 1 à 14, **caractérisée en ce que** le matériau fibreux (30) qui absorbe les bruits aériens est collé sur la face externe (26) de la jante (16) et/ou peut être maintenu mécaniquement au moyen d'éléments de fixation qui peuvent être reliés à la jante (16) ou qui entourent la face externe (26) de la jante.

16. Utilisation d'un matériau fibreux (30) comprenant une couche porteuse (42) et des fibres (44) en saillie sur cette couche, pour mise en place à l'intérieur de la partie de la face externe radiale (26) d'une jante de véhicule (16) qui délimite le volume interne d'un pneu (32), afin d'absorber le bruit aérien qui est produit à l'intérieur du pneu (32) par des vibrations agissant sur le pneu (32) sous forme d'impulsions.
